# EUROPÄISCHE PATENTSCHRIFT

(11) **EP 3 061 177 B1**
(45) Veröffentlichungstag und Bekanntmachung des Hinweises auf die Patenterteilung: **20.12.2017**
(21) Anmeldenummer: 14798696.2
(22) Anmeldetag: 10.10.2014
(51) Int. Cl.: H02K 1/27, H02K 15/03

(54) **VORRICHTUNG UND VERFAHREN ZUR HERSTELLUNG EINES ELEKTROMOTORS**
DEVICE AND METHOD FOR PRODUCING AN ELECTRIC MOTOR
DISPOSITIF ET PROCÉDÉ DE FABRICATION D'UN MOTEUR ÉLECTRIQUE

(30) Priorität: 24.10.2013 DE 102013221594
(43) Veröffentlichungstag der Anmeldung: 31.08.2016
(73) Patentinhaber: ThyssenKrupp System Engineering GmbH, 74076 Heilbronn (DE)
(72) Erfinder: WALTER, Andreas, 28790 Schwanewede (DE); SCHNIER, Jörn, 28790 Schwanewede (DE); KRAMER, Christoph, 28790 Schwanewede (DE)
(74) Vertreter: thyssenkrupp Intellectual Property GmbH
(86) Internationale Anmeldenummer: PCT/EP2014/002743
(87) Internationale Veröffentlichungsnummer: WO 2015/058840

(56) Entgegenhaltungen:
- EP-A1- 2 571 148
- DE-A1-102008 005 072
- US-A1- 2005 246 886
- US-A1- 2013 257 184

## Beschreibung

### Stand der Technik

Die vorliegende Erfindung geht aus von einer Vorrichtung zur Herstellung eines Elektromotors nach dem Oberbegriff des Anspruchs 1. Solche Vorrichtungen sind aus dem Stand der Technik allgemein bekannt.

Die Druckschrift EP 2 476 187 B1 offenbart beispielsweise ein entsprechendes Verfahren zum Zusammenbauen eines Rotors mit Permanentmagneten, bei welcher ein Permanentmagnet in eine Aussparung einer Halterung eingebracht wird, die Halterung und der Permanentmagnet mit einer Stützplatte kombiniert werden und anschließend der Permanentmagnet an der Stützplatte befestigt und die Halterung entfernt wird. Der an der Stützplatte befestigte Permanentmagnet wird sodann mit Lamellen bestückt.

Nachteilig an diesem Verfahren ist, dass zur Anordnung der Permanentmagneten in den Blechlamellen des Elektromotors die Permanentmagneten stets zuvor an einer Stützplatte zu befestigen sind.

Weiterhin ist die DE 10 2008 005 072 A1 zu nennen, die ein Verfahren zur Befestigung von Magneten an einem Läufer einer Axialflussmaschine beschreibt.

### Offenbarung der Erfindung

Es ist die Aufgabe der vorliegenden Erfindung eine Vorrichtung und ein Verfahren zur Verfügung zu stellen, dass eine einfache, schnelle und kostengünstige Bestückung eines Rotors eines Elektromotors mit Magneten ermöglicht und insbesondere keine Zwischenschritt zur Befestigung der Permanentmagneten an einer Stützplatte benötigt.

Gelöst wird diese Aufgabe mit einer Vorrichtung zur Herstellung eines Elektromotors, wobei die Vorrichtung ein Hilfswerkzeug zur Anordnung von Magnetelementen in einer Rotoreinheit des Elektromotors aufweist, wobei das Hilfswerkzeug eine Mehrzahl von Aufnahmen aufweist, wobei jede Aufnahme zum Aufnehmen und Positionieren jeweils eines Magnetelementen vorgesehen ist, wobei die Aufnahmen jeweils ein lösbares Haltemittel zum Halten eines Magnetelements in der Aufnahme aufweisen. Die Aufnahmen sind jeweils als Durchgangsöffnung in einem Grundkörper des Hilfswerkzeugs ausgebildet, wobei die Durchgangsöffnung eine Einführöffnung zum Einführen des Magnetelements in die Aufnahme und eine Ausführöffnung zum Ausführen des Magnetelements aus der Aufnahme in die Rotoreinheit aufweist.

Die erfindungsgemäße Vorrichtung hat gegenüber dem Stand der Technik den Vorteil, dass die Magnetelemente mittels des Hilfswerkzeugs unmittelbar in der Rotoreinheit angeordnet werden und ein Zwischenschritt zur Befestigung der Magnetelemente an einer zusätzlichen Stützplatte nicht erforderlich ist. Es wird folglich eine schnellere, einfachere und somit kostengünstigere Herstellung des Elektromotors ermöglicht. Dies wird dadurch ermöglicht, dass das Hilfswerkzeug ein lösbares Haltemittel zum Halten des in dem Hilfswerkzeug angeordneten Magnetelements aufweist. Hierdurch kann das Magnetelement kontrolliert direkt in der Rotoreinheit angeordnet und positioniert werden. Eine zusätzliche Positionier- und Anordnungshilfe, wie beispielsweise eine Stützplatte ist nicht erforderlich. Das Magnetelement umfasst insbesondere einen Permanentmagneten. Der Elektromotor umfasst insbesondere einen Synchronmotor. Eine Rotoreinheit im Sinne der vorliegenden Erfindung ist insbesondere eine Lamelle oder ein Lamellenpaket, vorzugsweise eine Blechlamelle oder ein Blechlamellenpaket.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist das lösbare Haltemittel im Bereich der Durchgangsöffnung zwischen der Einführöffnung und der Ausführöffnung oder im Bereich der Ausführöffnung angeordnet. In vorteilhafter Weise können die Magnetelemente durch die Einführöffnung von einer Seite des Hilfswerkzeugs aus in die Aufnahme eingeführt und sodann von dem lösbaren Haltemittel festgehalten werden. Anschließend braucht das Hilfswerkzeug lediglich über der Rotoreinheit angeordnet werden und kann nach dem Lösen des lösbaren Haltemittels durch die Ausführöffnung direkt in der Rotoreinheit angeordnet werden.

Gemäß einer weiteren bevorzugten Ausführungsform der vorliegenden Erfindung ist vorgesehen, dass die Aufnahmen jeweils eine Einführschräge zur Ausrichtung des in der entsprechenden Aufnahme aufgenommenen Magnetelements aufweisen, wobei die Einführschräge im Bereich der Einführöffnung ausgebildet ist. Die Einführschräge ist insbesondere im Bereich der Einführöffnung bevorzugt umlaufend und insbesondere trichterförmig ausgebildet. In vorteilhafter Weise wird das Magnetelement beim Einführen des Magnetelements in die Durchgangsöffnung mittels der Einführschräge automatisch ausgerichtet, so dass eine vergleichsweise präzise Positionierung der Magnetelemente in der Rotoreinheit erzielt wird. Die Einführschräge im Bereich der Einführöffnung ist bevorzugt derart ausgebildet, dass sich der Querschnitt der Durchgangsöffnung von der Einführöffnung zur Ausführöffnung verringert.

Denkbar ist, dass der Innenquerschnitt der Ausgangsöffnung im Wesentlichen dem Außenquerschnitt des Magnetelements entspricht.

Gemäß einer weiteren bevorzugten Ausführungsform der vorliegenden Erfindung ist vorgesehen, dass das Haltemittel einen in die Durchgangsöffnung verschiebbaren Klemmstößel zum kraftschlüssigen Einklemmen des Magnetelements in der Durchgangsöffnung umfasst. Der Klemmstößel ist vorzugsweise zwischen einer Klemmposition, in welcher das Klemmstößelende in die Durchgangsöffnung vorsteht und ein Magnetelement zwischen dem Klemmstößelende und der Wandung der Durchgangsöffnung einklemmbar ist, und einer Freigabeposition, in welcher das Klemmstößelende zurückgezogen ist, nicht in die Durchgangsöffnung vorsteht und ein in der Durchgangsöffnung angeordnetes Magnetelement freigibt, verschiebbar ist. Vorzugsweise ist jede Aufnahme mit einem Klemmstößel versehen, wobei sämtliche Klemmstößel über ein gemeinsames Bandelement betätigbar sind, wobei das Bandelement den Grundkörper vollständig umläuft. Denkbar ist, dass die Klemmstößel radial angeordnet sind und in radial im Grundkörper angeordneten Klemmstößelführungen gelagert sind. Das Bandelement umfasst insbesondere ein Stahlband. Das Bandelement wirkt insbesondere auf ein weiteres Klemmstößelende eines jeden Klemmstößels, welches dem Klemmstößelende in radialer Richtung jeweils gegenüberliegt. Beim Spannen des Stahlbandes werden sämtliche Klemmstößel in radialer Richtung nach Innen kraftbeaufschlagt und somit in die jeweiligen Klemmpositionen gebracht. Beim Lösen des Stahlbandes werden sämtliche Klemmstößel in ihre Freigabeposition gebracht. Denkbar ist, dass die Klemmstößel jeweils in die Freigabeposition mittels Federelementen vorgespannt sind.

Gemäß einer weiteren bevorzugten Ausführungsform der vorliegenden Erfindung ist vorgesehen, dass die Vorrichtung ein Überführungsmittel zum Überführen der in den Aufnahmen aufgenommenen Magnetelemente vom Hilfswerkzeug in die Rotoreinheit aufweist. Das Überführungsmittel sorgt vorteilhafterweise dafür, dass die Magnetelemente aus den Aufnahmen des Hilfswerkzeugs ausgetrieben und in Richtung der Rotoreinheit verschoben werden. Ein "Hängenbleiben" eines Magnetelements in einer Durchgangsöffnung wird somit verhindert.

Gemäß einer weiteren bevorzugten Ausführungsform der vorliegenden Erfindung ist vorgesehen, dass das Überführungsmittel eine Mehrzahl von Überführungsstößeln zum Einführen in die Durchgangsöffnung umfasst. Vorzugsweise wird in die Einführöffnung einer jeden Durchgangsöffnung ein Überführungsstößel axial eingeführt und somit das Magnetelement aus der Ausführöffnung aus der Durchgangsöffnung herausgeschoben. Alternativ oder zusätzlich ist denkbar, dass das Überführungsmittel ein Vibrationsmittel zum Vibrieren des Grundkörpers umfasst. Der Grundkörper wird mittels des Vibrationsmittels in Vibration versetzt, wodurch die Magnetelemente aus den Durchgangsöffnungen entweder allein aufgrund der Gravitationskraft oder mittels der Überführungsstößel herausrutschen.

Gemäß einer weiteren bevorzugten Ausführungsform der vorliegenden Erfindung ist vorgesehen, dass die Vorrichtung ein Bestückungssystem zum Bestücken der Aufnahmen des Hilfswerkzeugs mit Magnetelementen und ein Bereitstellungssystem zur Bereitstellung der Rotoreinheit aufweist, wobei das Hilfswerkzeug zwischen dem Bestückungssystem und dem Bereitstellungssystem verfahrbar ist. In vorteilhafter Weise ist das Hilfswerkzeug frei beweglich ausgebildet, so dass das Bestückungssystem und das Bereitstellungssystem räumlich getrennt voneinander angeordnet sein können. Die Vorrichtung zur Herstellung des Elektromotors ist somit vergleichsweise einfach und flexibel in eine komplexe industrielle Herstellungsstraße für Elektromotoren zu integrieren. Denkbar ist, dass das Hilfselement oder eine die Rotoreinheit bereitstellende Bereitstellungseinheit des Bereitstellungssystems schwimmend gelagert ist, um eine genaue Relativposition zwischen Hilfswerkzeug und Rotoreinheit einstellen zu können. Alternativ ist auch denkbar, dass die einzelnen Aufnahmen im Grundkörper jeweils schwimmend gelagert sind, so dass für jede einzelne Aufnahme eine individuelle Positionskorrektur beim Überführen der Magnetelemente in die Rotoreinheit ermöglicht wird. Das Hilfswerkzeug ist vorzugsweise auf einem Drehtisch angeordnet. Denkbar ist auch, dass das Hilfswerkzeug mittels eines Roboters von dem Bestückungssystem zum Bereitstellungssystem bewegt wird. In dem Bestückungssystem werden die Magnetelemente vorzugsweise vereinzelt und sodann eine Mehrzahl von Magnetelementen gleichzeitig in dem Hilfswerkzeug angeordnet. Beim Bereitstellungssystem werden diese Mehrzahl von Magnetelementen vorzugsweise wiederum gleichzeitig und gemeinsam in die Rotoreinheit überführt.

Ein weiterer Gegenstand der vorliegenden Erfindung ist ein Verfahren zur Herstellung eines Elektromotors, insbesondere mit einer Vorrichtung nach einem der vorhergehenden Ansprüche, wobei in einem ersten Verfahrensschritt Magnetelemente in Aufnahmen eines Hilfswerkzeugs angeordnet werden und wobei in einem zweiten Verfahrensschritt die Magnetelemente aus den Aufnahmen in eine Rotoreinheit eines Elektrodemotors überführt werden, dadurch gekennzeichnet, dass zwischen dem ersten und dem zweiten Verfahrensschritt die Magnetelemente in den Aufnahmen mittels eines lösbaren Haltemittels gehalten werden.

Das erfindungsgemäße Verfahren hat gegenüber dem Stand der Technik den Vorteil, dass die Magnetelemente durch eine Betätigung des lösbaren Haltemittels kontrolliert angeordnet und positioniert werden können. Hierdurch ist es möglich, die Magnetelemente direkt in der Rotoreinheit anzuordnen. Somit ist insbesondere kein Zwischenschritt notwendig, in welchem die Magnetelemente auf einer Stützplatte angeordnet werden.

Gemäß einer bevorzugten Ausführungsform der vorliegenden Erfindung ist vorgesehen, dass im ersten Verfahrensschritt die Magnetelemente jeweils mittels Einführschrägen der Aufnahmen ausgerichtet werden. Vorteilhafterweise wird somit beim Einführen der Magnetelemente in die Aufnahmen eine Ausrichtung und Positionierung der Magnetelemente vorgenommen.

Gemäß einer weiteren bevorzugten Ausführungsform der vorliegenden Erfindung ist vorgesehen, dass im ersten Verfahrensschritt die Magnetelemente von einem Bestückungssystem in die in Form von Durchgangsöffnungen ausgebildeten Aufnahmen eingeführt werden, wobei in einem zwischen dem ersten und dem zweiten Verfahrensschritt durchgeführten Zwischenschritt das Hilfswerkzeug von dem Bestückungssystem zu einem Bereitstellungssystem verfahren wird und wobei im zweiten Verfahrensschritt die Magnetelemente aus den Aufnahmen in die von dem Bereitstellungssystem bereitgestellte Rotoreinheit überführt werden. In vorteilhafter Weise wird das Hilfswerkzeug im Zwischenschritt zum Bereitstellungssystem bewegt. Das Verfahren zur Herstellung des Elektromotors ist somit vergleichsweise einfach und flexibel in eine komplexe industrielle Herstellungsstraße für Elektromotoren zu integrieren. In dem Bestückungssystem werden die Magnetelemente vorzugsweise vereinzelt und sodann eine Mehrzahl von Magnetelementen gleichzeitig in dem Hilfswerkzeug angeordnet. Beim Bereitstellungssystem werden diese Mehrzahl von Magnetelementen vorzugsweise wiederum gleichzeitig und gemeinsam in die Rotoreinheit überführt.

Gemäß einer weiteren bevorzugten Ausführungsform der vorliegenden Erfindung ist vorgesehen, dass die Magnetelemente während des ersten Verfahrensschritts und/oder während des Zwischenschrittes in den Durchgangsöffnungen jeweils mittels eines in die Durchgangsöffnung verschiebbaren Klemmstößels fixiert werden. In vorteilhafterweise ist somit ein kontrolliertes Festhalten und Loslassen der Magnetelemente möglich. Vorzugsweise werden die Klemmstößel der Aufnahmen über ein gemeinsames Bandelement betätigt. Sämtliche Magnetelemente können somit gemeinsam und synchron über das Bandelement betätigt werden.

Gemäß einer weiteren bevorzugten Ausführungsform der vorliegenden Erfindung ist vorgesehen, dass im zweiten Verfahrensschritt ein Grundkörper des Hilfswerkzeugs in Vibration versetzt wird, um die Magnetelement aus den Durchgangsöffnungen in die Rotoreinheit zu überführen. In vorteilhafter Weise werden die Magnetelemente somit insbesondere aufgrund der Gravitationskraft aus den Aufnahmen herausgetrieben.

Gemäß einer weiteren bevorzugten Ausführungsform der vorliegenden Erfindung ist vorgesehen, dass im zweiten Verfahrensschritt Überführungsstößel in die Durchgangsöffnungen eingeführt werden, um die Magnetelemente aus den Durchgangsöffnungen in die Rotoreinheit zu überführen. In vorteilhafter Weise wird somit ein Überführen der Magnetelemente in die Rotoreinheit sichergestellt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Perspektivansicht eines Hilfswerkzeugs einer Vorrichtung gemäß einer beispielhaften Ausführungsform der vorliegenden Erfindung.
- **Figur 2**: zeigt eine schematische Detailansicht des Hilfswerkzeugs der Vorrichtung gemäß der beispielhaften Ausführungsform der vorliegenden Erfindung.
- **Figur 3**: zeigt eine schematische Detailansicht des Hilfswerkzeugs der Vorrichtung gemäß der beispielhaften Ausführungsform der vorliegenden Erfindung und der Rotoreinheit.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

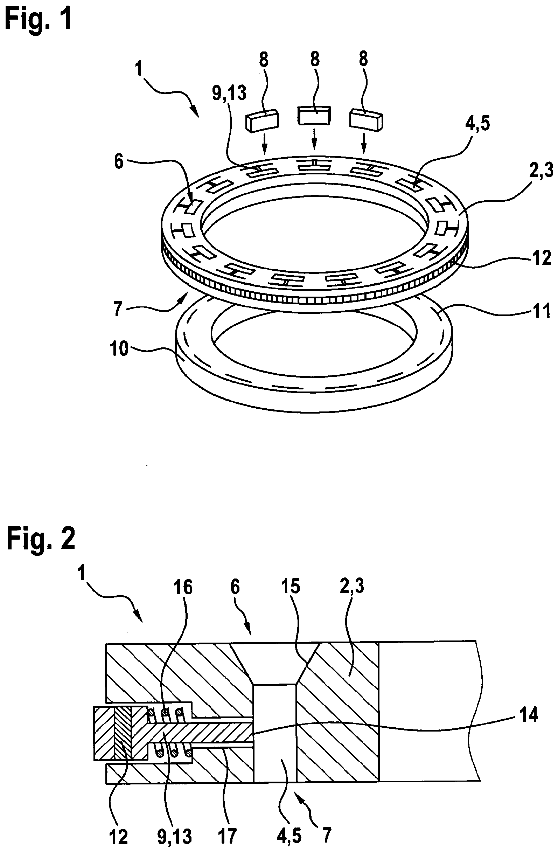

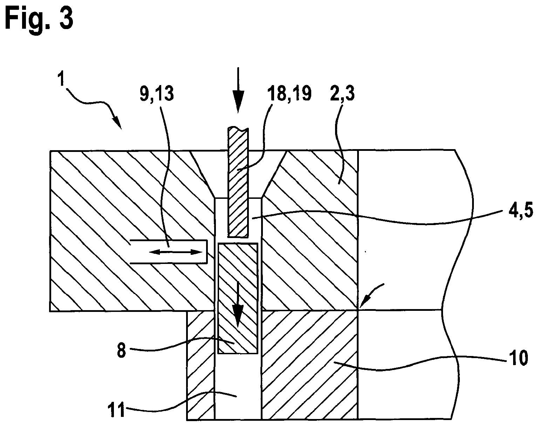

In **Figur 1** ist eine schematische Perspektivansicht eines Hilfswerkzeugs 2 einer Vorrichtung 1 zur Herstellung eines Elektromotors gemäß einer beispielhaften Ausführungsform der vorliegenden Erfindung dargestellt. Das Hilfswerkzeug 2 umfasst einen ringförmigen Grundkörper 3 und ist somit rotationssymmetrisch ausgebildet. Der Grundkörper 3 weist eine Mehrzahl von Aufnahmen 4 auf, welche sich hintereinander entlang des Umfangs des Grundkörpers 3 in einem geschlossenen Kreis erstrecken. Jede Aufnahme 4 umfasst eine Durchgangsöffnung 5, welche sich von der Oberseite des Grundkörpers 3 bis zur Unterseite des Grundkörpers 3 erstreckt. Die Durchgangsöffnung 5 weist im Bereich der Oberseite eine Einführöffnung 6 und im Bereich der Unterseite eine Abführöffnung 7 auf. Die Aufnahmen 4 dienen dazu, jeweils ein Magnetelement 8 aufzunehmen. Das Magnetelement 8 wird dabei mittels eines nicht näher dargestelltem Bestückungssystem durch die Einführöffnung 6 in die Durchgangsöffnung 5 eingeführt und in der Durchgangsöffnung 5 mittels eines lösbaren Haltemittels 9 festgehalten. Das lösbare Haltemittel 9 wird später anhand der Figuren 2 und 3 im Detail erläutert. Denkbar ist, dass das Hilfswerkzeug 2 auf einem Drehteller angeordnet ist, welcher den Grundkörper 3 taktweise dreht, so dass nacheinander alle Aufnahmen 4 mit einem Magnetelement 8 bestückt sind. Die Magnetelemente 8 umfassen im vorliegenden Beispiel vereinzelte Permanentmagneten. Nachdem sämtliche Aufnahmen 4 mit Magnetelementen 8 bestückt sind, wird das Hilfswerkzeug 2 von dem Bestückungssystem zu einem Bereitstellungssystem, beispielsweise mittels eines nicht dargestellten Roboters, transportiert.

Unterhalb des Hilfswerkzeugs 2 ist eine Rotoreinheit 10 eines aufzubauenden Elektromotors, insbesondere ein Synchronmotor, abgebildet. Die Rotoreinheit 10 wird von einer Bereitstellungseinheit des Bereitstellungssystems, welches nicht näher illustriert nicht, bereitgestellt. Die Rotoreinheit 10 umfasst im vorliegenden Beispiel ein Blechlamellenpaket eines Elektromotors. Das Blechlamellenpacket hat einen kreisrunden Querschnitt und weist eine Mehrzahl von Aussparungen 11 auf, welche sich entlang des Umfangs des Blechlamellenpakets erstrecken und welche zum Bestücken mit den Magnetelementen 8 vorgesehen sind. Das Blechlamellenpaket wurde in einem vorhergehenden Herstellungsschritt hergestellt. Das mit den Magnetelementen 8 bestückte Hilfswerkzeug 2 wird nun derart über dem Blechlamellenpaket positioniert, dass die Aufnahmen 4 des Hilfswerkzeugs 2 deckungsgleich mit den Aussparungen 11 des Blechlamellenpakets angeordnet sind. Hierzu sind das Hilfswerkzeug 2 und/oder die Bereitstellungseinheit vorzugsweise schwimmend gelagert. Denkbar wäre auch, dass die Aufnahmen 4 im Grundkörper 3 schwimmend gelagert sind, um für jede Aufnahme 4 eine individuelle Positionskorrektur durchführen zu können. Die Magnetelemente 8 werden sodann durch die Ausführöffnungen 7 aus den jeweiligen Durchgangsöffnungen 5 herausgetrieben und in die entsprechende Aussparungen 11 des Blechlamellenpakets bzw. in die Rotoreinheit 10 überführt. Auf diesem Wege wird die Rotoreinheit 10 eines Elektromotors, insbesondere eines Synchronmotors gefertigt.

Das Hilfswerkzeug 2 weist das lösbare Haltemittel 9 auf, das in Figur 1 nur schematisch angedeutet ist und in Figuren 2 und 3 im Detail erklärt wird. Das lösbare Haltemittel 9 umfasst im vorliegenden Beispiel für jede Aufnahme 4 einen Klemmstößel 13 zum kraftschlüssigen Einklemmen der Magnetelemente 8 in der jeweiligen Durchgangsöffnung 5. Der Klemmstößel 13 ist zwischen einer Klemmposition (illustriert in Figur 2), in welcher das Klemmstößelende 14 in die Durchgangsöffnung 5 vorsteht und das dort befindliche Magnetelement 8 zwischen dem Klemmstößelende 14 und der Wandung der Durchgangsöffnung 5 einklemmt, und einer Freigabeposition (illustriert in Figur 3), in welcher das Klemmstößelende 14 derart von der Durchgangsöffnung 5 zurückgezogen ist, dass es nicht in die Durchgangsöffnung 5 vorsteht und das in der Durchgangsöffnung 5 angeordnetes Magnetelement 8 freigibt, verschiebbar. Sämtliche Klemmstößel 13 sind über ein gemeinsames Bandelement 12 betätigbar, welches den Grundkörper 3 vollständig umläuft.

In **Figur 2** ist eine schematische Detailansicht des Hilfswerkzeugs 2 der Vorrichtung 1 gemäß der beispielhaften Ausführungsform der vorliegenden Erfindung in Form einer Schnittbilddarstellung gezeigt. Die Schnittbildansicht zeigt beispielhaft genau eine Durchgangsöffnung 5, welche die mit einer Einführöffnung 6 und einer Ausführöffnung 7 versehen ist. Durch die Einführöffnung 6 wird das Magnetelement 8 (in Figur 2 nicht dargestellt) in die Durchgangsöffnung 5 eingeführt und dort mittels des lösbaren Haltemittels 9 in Form des Klemmstößels 13 festgehalten, während das Hilfswerkzeug 2 von dem Bestückungssystem zum Bereitstellungssystem bewegt wird. Zur Ausrichtung und Positionierung des Magnetelements 8 in der Aufnahme 4 weist die Aufnahme 4 im Bereich der Einführöffnung 6 ein Mehrzahl von Einführschrägen 15 auf, wodurch die Einführöffnung 6 trichterförmig ausgebildet ist. Durch die Verringerung des Querschnitts der Durchgangsöffnung 5 wird der Permanentmagnet 5 beim Einführen in die Durchgangsöffnung 5 ausgerichtet, so dass keine genaue Positionierung der Magnetelemente 8 durch das Bestückungssystem notwendig ist. Der Klemmstößel 13 ist verschiebbar in einer Klemmstößelführung 17 angeordnet, so dass der Klemmstößel 13 zwischen der Klemmposition (siehe Figur 3) und der Freigabeposition (siehe Figur 2) verschiebbar ist. Der Klemmstößel 13 ist mittels zweier Federelemente 16 in die Freigabeposition elastisch vorgespannt und kann entgegen der Federkräfte in die Klemmposition verfahren werden, indem das als Stahlband ausgebildete umlaufende Bandelement 12 unter Spannung gebracht wird.

In **Figur 3** ist eine schematische Detailansicht des Hilfswerkzeugs 2 der Vorrichtung 1 gemäß der beispielhaften Ausführungsform der vorliegenden Erfindung und der Rotoreinheit 10 dargestellt. In Figur 3 ist das Hilfswerkzeug 2 nun derart über die Rotoreinheit 10 bewegt worden, dass die Ausführöffnung 7 sich entlang der vertikalen Richtung in Deckung mit der entsprechenden Aussparung 11 des Blechlamellenpakets befindet. Anschließend wird die Spannung des Bandelements 12 gelöst, so dass der Klemmstößel 13 durch die von den Federelementen 16 ausgehenden Federkräfte in die Freigabeposition überführt wird und das vormals von dem Klemmstößel 13 eingeklemmte Magnetelement 8 freigegeben wird (der Klemmstößel 13 ist in Figur 3 nur angedeutet). Anschließend wird das Magnetelement 8 mittels eines Überführungsmittels 18 in Form eines Überführungsstößels 18 aus der Ausführöffnung 7 der Durchgangsöffnung 5 herausgeschoben und in die Aussparung 11 der Rotoreinheit 10 überführt. Hierzu wird der Überführungsstößel 19 durch die Einführöffnung 6 in die Durchgangsöffnung 5 eingeführt und in Wirkverbindung mit dem Magnetelement 8 gebracht. Denkbar ist, dass das Überführen des Magnetelements 8 aus der Durchgangsöffnung 5 in die Aussparung 11 dadurch unterstützt wird, dass das Hilfswerkzeug 2 mittels eines Vibrationsmittels in Vibration versetzt wird. Vorzugsweise wird in jede Aufnahme ein Überführungsstößel 19 eingeführt.

Alternativ wäre auch denkbar, dass das Überführungsmittel 18 keine Überführungsstößel 19 aufweist, sondern die Magnetelemente 8 lediglich durch die Schwerkraft und die Vibration des Hilfswerkzeugs 2 aus den Aufnahmen 4 in die Aussparungen 11 rutschen.

### Bezugszeichenliste

- 1: Vorrichtung
- 2: Hilfswerkzeug
- 3: Grundkörper
- 4: Aufnahme
- 5: Durchgangsöffnung
- 6: Einführöffnung
- 7: Abführöffnung
- 8: Magnetelement
- 9: Haltemittel
- 10: Rotoreinheit
- 11: Aussparung
- 12: Bandelement
- 13: Klemmstößel
- 14: Klemmstößelende
- 15: Einführschräge
- 16: Federelement
- 17: Klemmstößelführung
- 18: Überführungsmittel
- 19: Überführungsstößel

## Patentansprüche

1. Vorrichtung zur Herstellung eines Elektromotors, wobei die Vorrichtung (1) ein Hilfswerkzeug (2) zur Anordnung von Magnetelementen (8) in einer Rotoreinheit (10) des Elektromotors aufweist, wobei das Hilfswerkzeug (2) eine Mehrzahl von Aufnahmen (4) aufweist, wobei jede Aufnahme (4) zum Aufnehmen und Positionieren jeweils eines Magnetelements (8) vorgesehen ist, wobei die Aufnahmen (4) jeweils ein lösbares Haltemittel (9) zum Halten eines Magnetelements (8) in der Aufnahme (4) aufweisen, **dadurch gekennzeichnet, dass** die Aufnahmen (4) jeweils als Durchgangsöffnung (5) in einem Grundkörper (3) des Hilfswerkzeugs (2) ausgebildet sind, wobei die Durchgangsöffnung (5) eine Einführöffnung (6) zum Einführen des Magnetelements (8) in die Aufnahme (4) und eine Ausführöffnung (7) zum Ausführen des Magnetelements (8) aus der Aufnahme (4) in die Rotoreinheit (10) aufweist.

2. Vorrichtung (1) nach Anspruch 1, wobei die Aufnahmen (4) jeweils eine Einführschräge (15) zur Ausrichtung des in der entsprechenden Aufnahme (4) aufgenommenen Magnetelements (8) aufweisen, wobei die Einführschräge (15) im Bereich der Einführöffnung (6) ausgebildet ist.

3. Vorrichtung (1) nach Anspruch 2, wobei die Einführschräge (15) im Bereich der Einführöffnung (6) bevorzugt umlaufend und insbesondere trichterförmig ausgebildet ist und/oder wobei die Einführschräge (15) im Bereich der Einführöffnung (6) bevorzugt derart ausgebildet ist, dass sich der Querschnitt der Durchgangsöffnung (5) von der Einführöffnung (6) zur Ausführöffnung (7) verringert.

4. Vorrichtung (1) nach einem der vorhergehenden Ansprüche, wobei das Haltemittel (9) einen in die Durchgangsöffnung (5) verschiebbaren Klemmstößel (13) zum kraftschlüssigen Einklemmen des Magnetelements (8) in der Durchgangsöffnung (5) umfasst.

5. Vorrichtung (1) nach Anspruch 4, wobei jede Aufnahme (4) mit einem Klemmstößel (13) versehen ist, wobei sämtliche Klemmstößel (13) über ein gemeinsames Bandelement (12) betätigbar sind, wobei das Bandelement (12) den Grundkörper (3) vollständig umläuft.

6. Vorrichtung (1) nach einem der vorhergehenden Ansprüche, wobei die Vorrichtung (1) ein Überführungsmittel (18) zum Überführen der in den Aufnahmen (4) aufgenommenen Magnetelemente (8) vom Hilfswerkzeug (2) in die Rotoreinheit (10) aufweist.

7. Vorrichtung (1) nach Anspruch 6, wobei das Überführungsmittel (18) eine Mehrzahl von Überführungsstößeln (19) zum Einführen in die Durchgangsöffnung (5) und/oder ein Vibrationsmittel zum Vibrieren des Grundkörpers (3) umfasst.

8. Vorrichtung (1) nach einem der vorhergehenden Ansprüche, wobei die Vorrichtung (1) ein Bestückungssystem zum Bestücken der Aufnahmen (4) des Hilfswerkzeugs (2) mit Magnetelementen (8) und ein Bereitstellungssystem zur Bereitstellung der Rotoreinheit (10) aufweist, wobei das Hilfswerkzeug (2) zwischen dem Bestückungssystem und dem Bereitstellungssystem verfahrbar ist.

9. Verfahren zur Herstellung eines Elektromotors, insbesondere mit einer Vorrichtung (1) nach einem der vorhergehenden Ansprüche, wobei in einem ersten Verfahrensschritt Magnetelemente (8) in Aufnahmen (4) eines Hilfswerkzeugs (2) angeordnet werden und wobei in einem zweiten Verfahrensschritt die Magnetelemente (8) aus den Aufnahmen (4) in eine Rotoreinheit (10) eines Elektrodemotors überführt werden, **dadurch gekennzeichnet, dass** zwischen dem ersten und dem zweiten Verfahrensschritt die Magnetelemente (8) in den Aufnahmen (4) mittels eines lösbaren Haltemittels (9) gehalten werden.

10. Verfahren nach Anspruch 9, wobei im ersten Verfahrensschritt die Magnetelemente (8) jeweils mittels Einführschrägen (15) der Aufnahmen (4) ausgerichtet werden.

11. Verfahren nach einem der Ansprüche 9 oder 10, wobei im ersten Verfahrensschritt die Magnetelemente (8) von einem Bestückungssystem in die in Form von Durchgangsöffnungen (5) ausgebildeten Aufnahmen (4) eingeführt werden, wobei in einem zwischen dem ersten und dem zweiten Verfahrensschritt durchgeführten Zwischenschritt das Hilfswerkzeug (2) von dem Bestückungssystem zu einem Bereitstellungssystem verfahren wird und wobei im zweiten Verfahrensschritt die Magnetelemente (8) aus den Aufnahmen (4) in die von dem Bereitstellungssystem bereitgestellte Rotoreinheit (10) überführt werden.

12. Verfahren nach einem der Ansprüche 10 oder 11, wobei die Magnetelemente (8) während des ersten Verfahrensschritts und/oder während des Zwischenschrittes in den Durchgangsöffnungen (5) jeweils mittels eines in die Durchgangsöffnung (5) verschiebbaren Klemmstößels (13) fixiert werden.

13. Verfahren nach Anspruch 12, wobei die Klemmstößel der Aufnahmen (4) über ein gemeinsames Bandelement (12) betätigt werden.

14. Verfahren nach einem der Ansprüche 9 bis 13, wobei im zweiten Verfahrensschritt ein Grundkörper des Hilfswerkzeugs (2) in Vibration versetzt wird, um die Magnetelemente (8) aus den Durchgangsöffnungen (5) in die Rotoreinheit (10) zu überführen.

15. Verfahren nach einem der Ansprüche 9 bis 14, wobei im zweiten Verfahrensschritt Überführungsstößel (19) in die Durchgangsöffnungen (5) eingeführt werden, um die Magnetelemente (8) aus den Durchgangsöffnungen (5) in die Rotoreinheit (10) zu überführen.

## Claims

1. Device for producing an electric motor, wherein the device (1) comprises an auxiliary tool (2) for arranging magnet elements (8) in a rotor unit (10) of the electric motor, wherein the auxiliary tool (2) comprises a plurality of receptacles (4), wherein each receptacle (4) is provided for receiving and positioning one magnet element (8) each, wherein the receptacles (4) each comprise a releasable holding means (9) for holding a magnet element (8) in the receptacle (4), **characterized in that** the receptacles (4) are each designed as a passage opening (5) in a basic body (3) of the auxiliary tool (2), wherein the passage opening (5) comprises an insertion opening (6) for inserting the magnet element (8) into the receptacle (4) and a delivery opening (7) for delivering the magnet element (8) from the receptacle (4) into the rotor unit (10).

2. Device (1) according to Claim 1, wherein the receptacles (4) each comprise an insertion slope (15) for aligning the magnet element (8) received in the corresponding receptacle (4), wherein the insertion slope (15) is formed in the region of the insertion opening (6).

3. Device (1) according to Claim 2, wherein the insertion slope (15) in the region of the insertion opening (6) is preferably of encircling and in particular funnel-shaped design, and/or wherein the insertion slope (15) in the region of the insertion opening (6) is preferably designed in such a manner that the cross section of the passage opening (5) is reduced from the insertion opening (6) to the delivery opening (7).

4. Device (1) according to one of the preceding claims, wherein the holding means (9) comprises a clamping ram (13), which is displaceable into the passage opening (5), for the force-fitting clamping of the magnet element (8) in the passage opening (5).

5. Device (1) according to Claim 4, wherein each receptacle (4) is provided with a clamping ram (13), wherein all of the clamping rams (13) are actuable via a common band element (12), wherein the band element (12) completely encircles the basic body (3).

6. Device (1) according to one of the preceding claims, wherein the device (1) comprises a transfer means (18) for transferring the magnet elements (8), which are received in the receptacles (4), from the auxiliary tool (2) into the rotor unit (10).

7. Device (1) according to Claim 6, wherein the transfer means (18) comprises a plurality of transfer rams (19) for inserting into the passage opening (5), and/or a vibration means for vibrating the basic body (3).

8. Device (1) according to one of the preceding claims, wherein the device (1) comprises an equipping system for equipping the receptacles (4) of the auxiliary tool (2) with magnet elements (8), and a supply system for supplying the rotor unit (10), wherein the auxiliary tool (2) is movable between the equipping system and the supply system.

9. Method for producing an electric motor, in particular with a device (1) according to one of the preceding claims, wherein, in a first method step, magnet elements (8) are arranged in receptacles (4) of an auxiliary tool (2), and wherein, in a second method step, the magnet elements (8) are transferred from the receptacles (4) into a rotor unit (10) of an electric motor, **characterized in that** the magnet elements (8) are held in the receptacles (4) by means of a releasable holding means (9) between the first and second method step.

10. Method according to Claim 9, wherein, in the first method step, the magnet elements (8) are each aligned by means of insertion slopes (15) of the receptacles (4).

11. Method according to either of Claims 9 and 10, wherein, in the first method step, the magnet elements (8) are inserted by an equipping system into the receptacles (4), which are designed in the form of passage openings (5), wherein, in an intermediate step carried out between the first and the second method step, the auxiliary tool (2) is moved by the equipping system to a supply system, and wherein, in the second method step, the magnet elements (8) are transferred from the receptacles (4) into the rotor unit (10) supplied by the supply system.

12. Method according to either of Claims 10 and 11, wherein, during the first method step and/or during the intermediate step, the magnet elements (8) are each fixed in the passage openings (5) by means of a clamping ram (13) which is displaceable into the passage opening (5).

13. Method according to Claim 12, wherein the clamping rams of the receptacles (4) are actuated via a common band element (12).

14. Method according to one of Claims 9 to 13, wherein, in the second method step, a basic body of the auxiliary tool (2) is set into vibration in order to transfer the magnet elements (8) from the passage openings (5) into the rotor unit (10).

15. Method according to one of Claims 9 to 14, wherein, in the second method step, transfer rams (19) are inserted into the passage openings (5) in order to transfer the magnet elements (8) from the passage openings (5) into the rotor unit (10).

## Revendications

1. Dispositif de fabrication d'un moteur électrique, dans lequel le dispositif (1) présente un outil auxiliaire (2) pour l'agencement d'éléments d'aimant (8) dans une unité de rotor (10) du moteur électrique, dans lequel l'outil auxiliaire (2) présente une multiplicité de logements (4), dans lequel chaque logement (4) est prévu pour recevoir et positionner respectivement un élément d'aimant (8), dans lequel les logements (4) présentent respectivement un moyen de maintien amovible (9) destiné à maintenir un élément d'aimant (8) dans le logement (4), **caractérisé en ce que** les logements (4) sont respectivement réalisés sous la forme d'une ouverture de passage (5) dans un corps de base (3) de l'outil auxiliaire (2), dans lequel l'ouverture de passage (5) présente une ouverture d'entrée (6) pour l'introduction de l'élément d'aimant (8) dans le logement (4) et une ouverture de sortie (7) pour l'extraction de l'élément d'aimant (8) hors du logement (4) dans l'unité de rotor (10).

2. Dispositif (1) selon la revendication 1, dans lequel les logements (4) présentent respectivement une rampe d'entrée (15) pour l'orientation de l'élément d'aimant (8) contenu dans le logement correspondant (4), dans lequel la rampe d'entrée (15) est formée dans la région de l'ouverture d'entrée (6).

3. Dispositif (1) selon la revendication 2, dans lequel la rampe d'entrée (15) est formée de préférence sous forme circulaire dans la région de l'ouverture d'entrée (6) et en particulier en forme d'entonnoir et/ou dans lequel la rampe d'entrée (15) est formée dans la région de l'ouverture d'entrée (6) de préférence de telle manière que la section transversale de l'ouverture de passage (5) diminue de l'ouverture d'entrée (6) à l'ouverture de sortie (7).

4. Dispositif (1) selon l'une quelconque des revendications précédentes, dans lequel le moyen de maintien (9) comprend un poussoir de serrage (13) déplaçable dans l'ouverture de passage (5) pour le serrage par force de l'élément d'aimant (8) dans l'ouverture de passage (5).

5. Dispositif (1) selon la revendication 4, dans lequel chaque logement (4) est muni d'un poussoir de serrage (13), dans lequel tous les poussoirs de serrage (13) peuvent être actionnés par un élément de bande commun (12), dans lequel l'élément de bande (12) entoure entièrement le corps de base (3).

6. Dispositif (1) selon l'une quelconque des revendications précédentes, dans lequel le dispositif (1) présente un moyen de transfert (18) pour le transfert des éléments d'aimant (8) contenus dans les logements (4) de l'outil auxiliaire (2) à l'unité de rotor (10).

7. Dispositif (1) selon la revendication 6, dans lequel le moyen de transfert (18) comprend une multiplicité de poussoirs de transfert (19) pour l'introduction dans l'ouverture de passage (5) et/ou un moyen de vibration pour la vibration du corps de base (3) .

8. Dispositif (1) selon l'une quelconque des revendications précédentes, dans lequel le dispositif (1) présente un système de garniture pour la garniture des logements (4) de l'outil auxiliaire (2) avec des éléments d'aimant (8) et un système de fourniture pour la fourniture de l'unité de rotor (10), dans lequel l'outil auxiliaire (2) est déplaçable entre le système de garniture et le système de fourniture.

9. Procédé de fabrication d'un moteur électrique, en particulier avec un dispositif (1) selon l'une quelconque des revendications précédentes, dans lequel dans une première étape on dispose des éléments d'aimant (8) dans des logements (4) d'un outil auxiliaire (2) et dans lequel dans une deuxième étape on transfère les éléments d'aimant (8) des logements (4) à l'unité de rotor (10) d'un moteur électrique, **caractérisé en ce qu'**entre la première étape et la deuxième étape on maintient les éléments d'aimant (8) dans les logements (4) au moyen d'un moyen de maintien amovible (9).

10. Procédé selon la revendication 9, dans lequel dans la première étape on oriente les éléments d'aimant (8) respectivement au moyen de rampes d'entrée (15) des logements (4).

11. Procédé selon l'une des revendications 9 ou 10, dans lequel dans la première étape on introduit les éléments d'aimant (8) à partir d'un système de garniture dans les logements (4) réalisés sous la forme d'ouvertures de passage (5), dans lequel dans une étape intermédiaire exécutée entre la première étape et la deuxième étape on déplace l'outil auxiliaire (2) du système de garniture à un système de fourniture et dans lequel dans la deuxième étape on transfère les éléments d'aimant (8) des logements (4) à l'unité de rotor (10) fournie par le système de fourniture.

12. Procédé selon l'une des revendications 10 ou 11, dans lequel pendant la première étape et/ou pendant l'étape intermédiaire on fixe les éléments d'aimant (8) dans les ouvertures de passage (5) respectivement au moyen d'un poussoir de serrage (13) déplaçable dans l'ouverture de passage (5).

13. Procédé selon la revendication 12, dans lequel on actionne les poussoirs de serrage des logements (4) au moyen d'un élément de bande commun (12).

14. Procédé selon l'une quelconque des revendications 9 à 13, dans lequel dans la deuxième étape on met en vibration un corps de base de l'outil auxiliaire (2), afin de transférer les éléments d'aimant (8) des ouvertures de passage (5) à l'unité de rotor (10).

15. Procédé selon l'une quelconque des revendications 9 à 14, dans lequel dans la deuxième étape on introduit des poussoirs de transfert (19) dans les ouvertures de passage (5), afin de transférer les éléments d'aimant (8) des ouvertures de passage (5) à l'unité de rotor (10) .
